# EUROPEAN PATENT APPLICATION

(11) **EP 4 538 955 A1**
(43) Date of publication of application: **16.04.2025**
(21) Application number: 23819751.1
(22) Date of filing: 01.06.2023
(51) Int. Cl.: G06Q 50/06, B60L 5/00, B60L 15/20, B60L 53/12, B60L 53/64, B60L 53/67, B60L 53/68, B60L 55/00, B60M 7/00, G01C 21/26, G08G 1/09, H02J 7/00, H02J 50/10, H02J 50/40

(54) **CONTACTLESS POWER SUPPLY SYSTEM, SERVER, INFORMATION PROVIDING DEVICE, MOBILE OBJECT, AND MOBILE OBJECT CONTROL DEVICE**

(30) Priority: 08.06.2022 JP 2022093137
(71) Applicant: DENSO CORPORATION, Kariya-shi, Aichi 448-8661 (JP)
(72) Inventor: KIMURA, Kazutaka, Toyota-shi, Aichi 471-8571 (JP); HASHIMOTO, Toshiya, Toyota-shi, Aichi 471-8571 (JP); HASHIMOTO, Makoto, Toyota-shi, Aichi 471-8571 (JP); OBAYASHI, Kazuyoshi, Kariya-shi, Aichi 448-8661 (JP); TANI, Keisuke, Kariya-shi, Aichi 448-8661 (JP); YAMAGUCHI, Nobuhisa, Kariya-shi, Aichi 448-8661 (JP); KANESAKI, Masaki, Kariya-shi, Aichi 448-8661 (JP); TAKEMURA, Yuichi, Kariya-shi, Aichi 448-8661 (JP)
(74) Representative: TBK
(86) International application number: PCT/JP2023/020481
(87) International publication number: WO 2023/238771

(57) **Abstract**

A noncontact power supply system (100) is provided with an information device (4) associated with a moving body (3) and configured to provide information to a user of the moving body (3), the moving body (3) configured to be able to receive noncontact power supply from ground power supply apparatuses (2), and a server (1) configured to communicate with the information device (4). The server (1) is configured to set charges for usage of ground power supply apparatuses (2) based on electric power demand. The information device (4) is configured to provide the user with information relating to the charges for usage of ground power supply apparatuses (2) acquired by communicating with the server (1).

## Description

### FIELD

The present invention relates to a noncontact power supply system, server, information device, moving body, and control device of a moving body.

### BACKGROUND

Japanese Unexamined Patent Publication No. 2019-526219 discloses a noncontact power supply system able to transmit electric power by noncontact from a ground power supply apparatus to a vehicle on a road in which the ground power supply apparatus is installed.

If vehicles desiring noncontact power supply end up concentrating at just some ground power supply apparatuses, the supply of electric power is liable to become insufficient for the demand for electric power. Further, if trying to increase the electric power supply capacity to deal with such a situation, enormous capital investment is liable to become necessary.

The present invention was made focusing on such a problem and has as its object to keep vehicles desiring noncontact power supply from ending up concentrating at just some ground power supply apparatuses.

To solve this problem, the noncontact power supply system according to one aspect of the present invention is provided with an information device associated with a moving body and configured to provide information to a user of the moving body, the moving body configured to be able to receive noncontact power supply from ground power supply apparatuses, and a server configured to communicate with the information device. The server is configured to set charges for usage of ground power supply apparatuses based on electric power demand. The information device is configured to provide the user with information relating to the charges for usage of ground power supply apparatuses acquired by communicating with the server.

Further, the server according to another aspect of the present invention is provided with a communication part configured to be able to communicate with an information device which is associated with a moving body and is configured to provide information to a user of the moving body, the moving body configured to be able to receive noncontact power supply from ground power supply apparatuses, and a control part. The control part is configured to set charges for usage of ground power supply apparatuses based on electric power demand and to transmit information relating to the set charges for usage of ground power supply apparatuses to the information device.

Further, the information device according to another aspect of the present invention is a device associated with a moving body and configured to provide information to a user of the moving body. The moving body is configured to be able to receive noncontact power supply from ground power supply apparatuses, and the information device is provided with a communication part configured to be able to communicate with a server for setting charges for usage of ground power supply apparatuses based on electric power demand and a control part. The control part is configured to provide the user with information relating to the charges for usage of ground power supply apparatuses acquired by communicating with the server.

Further, the moving body according to another aspect of the present invention is a moving body configure to be able to receive noncontact power supply from a ground power supply apparatus and is provided with a communication part configured to be able to communicate with a server for setting charges for usage of ground power supply apparatuses based on electric power demand and with an information part providing the user with information relating to the charges for usage of ground power supply apparatuses acquired by communicating with the server. The information part is configured to provide the user with information relating to the charges for usage of ground power supply apparatuses acquired by communicating with the server.

Further, the control device according to another aspect of the present invention is a control device mounted in a moving body which is configure to be able to receive noncontact power supply from a ground power supply apparatus and is provided with a communication part configured to be able to communicate with a server for setting charges for usage of ground power supply apparatuses based on electric power demand and an information part providing the user with information relating to the charges for usage of ground power supply apparatuses acquired by communicating with the server. The information part is configured to provide the user with information relating to the charges for usage of ground power supply apparatuses acquired by communicating with the server.

Further, the control device according to another aspect of the present invention is a control device mounted in a moving body which is configured to be able to receive noncontact power supply from a ground power supply apparatus and is provided with an automated driving control part for automatically performing driving operations of the moving body and a communication part configured to be able to communicate with a server for setting charges for usage of ground power supply apparatuses based on electric power demand. The automated driving control part is configured so as to use information relating to the charges for usage of ground power supply apparatuses acquired by communicating with the server so as to automatically control the moving body.

According to these aspects of the present invention, the charges for usage of ground power supply apparatuses are set based on electric power demand, and information relating to the set charges for usage of ground power supply apparatuses is provided to the user of the ground power supply apparatus or automated driving of the moving body is performed based on that information. For this reason, the user of the ground power supply apparatus or the automated driving capable moving body becomes able to suitably select the ground power supply apparatus to use by, for example, comparing the situation at each time such as the level of urgency of power supply and the charges for usage of ground power supply apparatuses. As a result, vehicles can be dispersed, so it is possible to keep vehicles desiring noncontact power supply from ending up concentrating at just some of the ground power supply apparatuses.

### BRIEF DESCRIPTION OF DRAWINGS

FIG. 1 is a schematic view of the configuration of a noncontact power supply system.
FIG. 2 is a schematic view of the configuration of ground power supply apparatuses.
FIG. 3 is a schematic view of the configuration of a vehicle.
FIG. 4 is a schematic view of the configuration of an information device.
FIG. 5 is sequence diagram of operation for explaining contents of processing for setting a charge for usage according to a first embodiment of the present invention.
FIG. 6 is sequence diagram of operation for explaining contents of processing for providing information according to the first embodiment of the present invention.
FIG. 7 is a view explaining one example of a method of provision when providing information on a charge for usage of a ground power supply apparatus by an information device.
FIG. 8 is a view explaining another example of a method of provision when providing information on a charge for usage of a ground power supply apparatus by an information device.
FIG. 9 is sequence diagram of operation for explaining contents of processing for setting a charge for usage according to a second embodiment of the present invention.
FIG. 10 is sequence diagram of operation for explaining contents of processing for setting a charge for usage according to a third embodiment of the present invention.
FIG. 11 is sequence diagram of operation for explaining contents of processing for setting a charge for usage according to a fourth embodiment of the present invention.
FIG. 12 is a view schematically showing the state of supply of electric power by a power transmission/distribution business to a plurality of power distribution regions.

### DESCRIPTION OF EMBODIMENTS

Below, embodiments will be explained in detail while referring to the drawings. Note that, in the following explanation, similar component elements will be assigned the same reference notations.

### (First Embodiment)

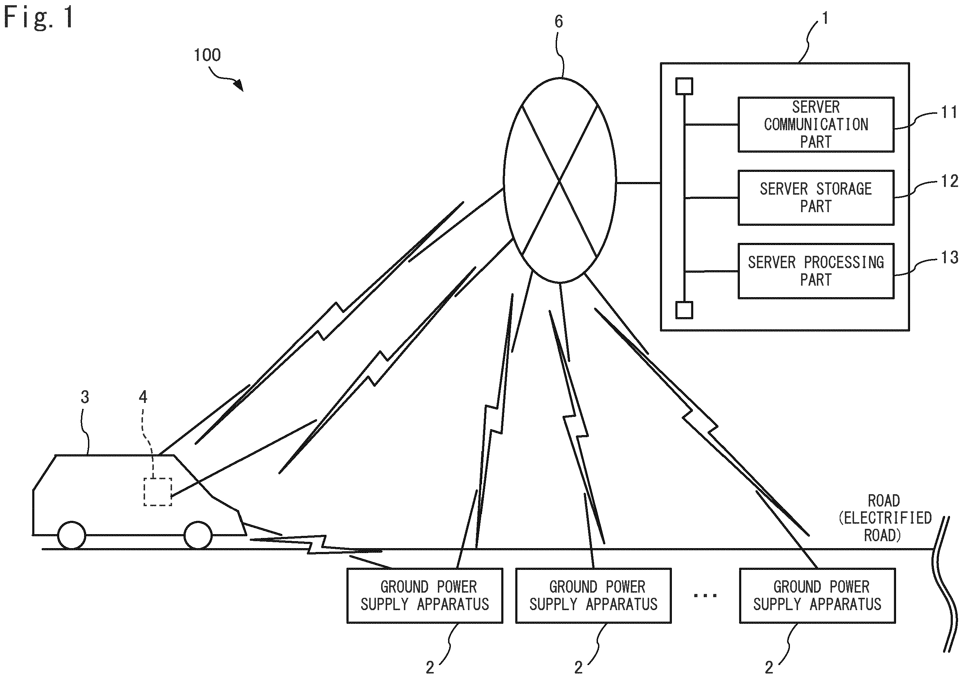

FIG. 1 is a schematic view of the configuration of a noncontact power supply system 100 according to a first embodiment of the present invention.

The noncontact power supply system 100 according to the present embodiment is provided with a server 1, ground power supply apparatuses 2, a vehicle 3 as one example of a moving body, and an information device 4 associated with the vehicle 3 and providing various information to a user of the vehicle 3, that is, a user of the noncontact power supply system 100 (below, referred to as a "system user") and is configured to be able to transmit electric power by noncontact to the vehicle 3 from the ground power supply apparatuses 2 (noncontact power supply). The method of noncontact transmission of electric power is not particularly limited and can be suitably selected from magnetic coupling (electromagnetic induction) or electric field coupling, magnetic field resonance coupling (magnetic field resonance), electric field resonance coupling (electric field resonance), and other transmission systems.

Further, the noncontact power supply system 100 is configured to set the charges for usage of the ground power supply apparatuses 2 in accordance with electric power demand and to provide information relating to the set charges for usage of the ground power supply apparatuses 2 through the information device 4 to the system user. In the present embodiment, the charge for usage of a ground power supply apparatus 2 is made a value per 1 [kWh] amount of electric power supplied (yen/kWh), but the invention is not limited to this.

Note that, FIG. 1 shows as one example of installation of ground power supply apparatuses 2, an example where a plurality of ground power supply apparatuses 2 are set consecutively along a road at predetermined intervals. In the following explanation, a road at which ground power supply apparatuses 2 are installed will be referred to as an "electrified road" in accordance with need.

As shown in FIG. 1, the server 1 is provided with a server communication part 11, a server storage part 12, and a server processing part 13.

The server communication part 11 has a communication interface circuit for connecting the server 1 with a network 6 and is configured to enable communication with the ground power supply apparatuses 2, vehicle 3, and information device 4 through the network 6.

The server storage part 12 has an HDD (hard disk drive) or SSD (solid state drive), optical recording medium, semiconductor memory, or other storage medium and stores various computer programs and data etc. used for processing at the server processing part 13.

The server processing part 13 has one or more CPUs (central processing units) and their peripheral circuits. The server processing part 13 runs various computer programs stored in the server storage part 12 so as to comprehensively control the overall operation of the server 1 and is for example a processor.

If the server processing part 13 and in turn the server 1 receives a signal requesting utilization of the noncontact power supply system 100 from the vehicle 3, it confirms whether the vehicle 3 has the right to utilize the same. If confirmation is obtained, it transfers various information with the ground power supply apparatuses 2 and vehicle 3 so as to enable the vehicle 3 to receive power supply from the ground power supply apparatuses 2. Regarding details of this transfer, explanations will be omitted here since this is not a major part of the present invention.

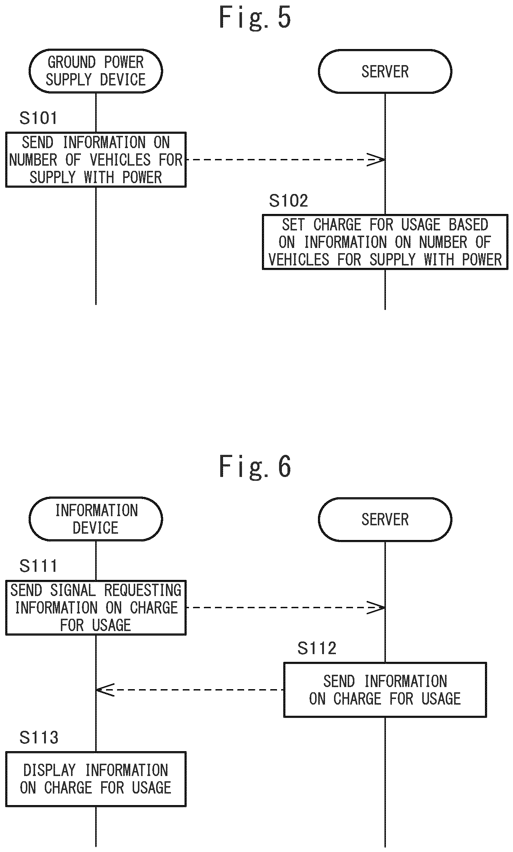

Further, the server processing part 13 sets the charges for usage of the ground power supply apparatuses 2 based on the electric power demand from vehicles 3 on the ground power supply apparatuses 2 and sends information relating to the set charges for usage to the information device 4. The content of these processing performed by the server processing part 13 will be explained later with reference to FIG. 5 and FIG. 6.

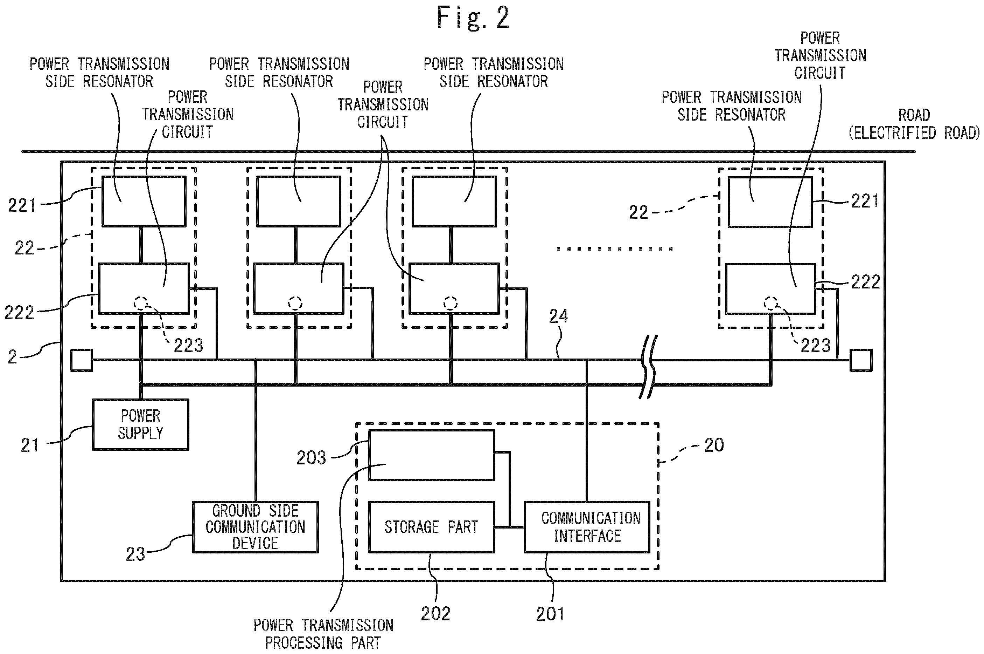

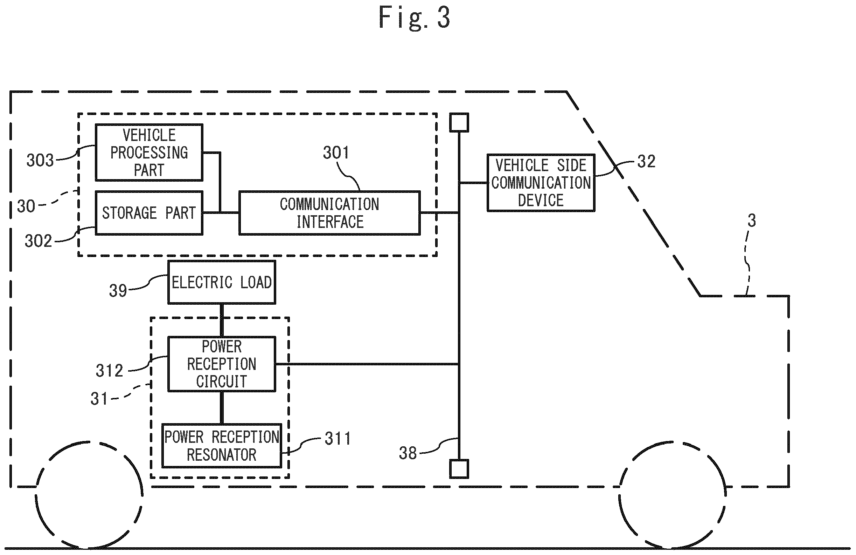

Next, referring to FIG. 2 and FIG. 3, the configuration of a ground power supply apparatus 2 according to the present embodiment and configuration of the parts of the vehicle 3 relating to noncontact power supply will be explained.

FIG. 2 is a view showing one example of the configuration of a ground power supply apparatus 2 according to the present embodiment.

As shown in FIG. 2, the ground power supply apparatus 2 is provided with a power supply 21, power transmission device 22, ground side communication device 23, and power transmission control device 20. The power transmission device 22 and the ground side communication device 23 are connected to the power transmission control device 20 through an internal network 24 of the ground power supply apparatus 2 based on the CAN (controller area network) or other standard. Note that FIG. 2 shows an example where the ground power supply apparatus 2 has a plurality of power transmission devices 22, but it may also have a single power transmission device 22.

The power supply 21 supplies power to the power transmission device 22. The power supply 21 is, for example, a commercial AC power supply supplying single-phase AC power. Note that the power supply 21 may also be another AC power supply supplying three-phase AC power or may be a DC power supply such as a fuel cell. Further, FIG. 2 shows an example where power is supplied to the individual power transmission devices 22 by a common power supply 21, but a dedicated power supply may also be prepared for each power transmission device to supply power.

The power transmission device 22 is a device for transmitting power supplied from the power supply 21 to a vehicle 3 and is provided with a power transmission side resonator 221 and a power transmission circuit 222.

The power transmission side resonator 221 is a resonance circuit including a power transmission coil and is configured to resonate by a predetermined resonance frequency f₀. In the present embodiment, the resonance frequency f₀ is set to 85 kHz determined by the SAE TIR J2954 standard as the frequency band for noncontact power transmission, but the invention is not limited to this.

Note that while explained later referring to FIG. 3, the vehicle 3 is provided with a power reception side resonator 311 corresponding to this power transmission side resonator 221. The power reception side resonator 311 is a resonance circuit including a power reception coil and is configured to resonate at the same resonance frequency f₀ as the power transmission side resonator 221. By making the power transmission side resonator 221 resonate, the power transmission coil of the power transmission side resonator 221 and the power reception coil of the power reception side resonator 311 disposed spaced apart are magnetically coupled and power is transmitted by noncontact from the power transmission device 22 to the power reception device 31.

The power transmission circuit 222 is an electrical circuit provided with a rectifier and inverter and is configured to be controlled by the power transmission control device 20 to be able to convert AC power supplied from the power supply 21 to DC power by the rectifier and to convert the DC power by the inverter to the desired AC power able to make the power transmission side resonator 221 resonate and then supply it to the power transmission side resonator 221. Note that the configuration of the power transmission circuit 222 is not limited to such a configuration and may be suitably changed in accordance with the type of the power supply 21.

Further, the power transmission circuit 222 is provided with a power transmission sensor 223 for detecting whether power is being transmitted (in other words, whether noncontact power supply is being performed). The power transmission sensor 223, for example, includes a power transmission side current sensor detecting a current I1 flowing through the power transmission side resonator 221 (below, referred to as the "power transmission side current") and power transmission side voltage sensor detecting a voltage V1 applied to the power transmission side resonator 221 (below, referred to as the "power transmission side voltage"). The detection signal of the power transmission sensor 223 is input to the power transmission control device 20.

The ground side communication device 23 is configured so as to enable communication between at least the server 1 and vehicle 3.

Specifically, the ground side communication device 23 is configured so as to be able to access a wireless base station connected with the network 6 (see FIG. 1) through a gateway etc. to thereby connect with the network 6 through the wireless base station. Due to this, wide area wireless communication is performed between the ground side communication device 23 and the server 1 and the various information required for noncontact power supply to the vehicle 3 is exchanged with the server 1. Wide area wireless communication is communication with a longer communication distance compared with the later explained short range wireless communication. For example, it is communication with a communication distance of 10 meters to 10 kilometers. As wide area wireless communication, various wireless communication schemes with long communication distances can be used. For example, communication based on the 3GPP^{®} and standards formulated by the IEEE such as the 4G, LTE, 5G, WiMAX, and other communication standards can be used.

Further, the ground side communication device 23 is configured so as to directly perform short range wireless communication with a vehicle side communication device 32 mounted in the vehicle 3. Short range wireless communication is communication with a shorter communication distance compared with wide area wireless communication. For example, it is communication with a communication distance of less than 10 meters. As short range wireless communication, various short range wireless communication schemes with short communication distances can be used. For example, communication based on any communication standard formulated by the IEEE, ISO, IEC, etc. (for example, Bluetooth^{®}, ZigBee^{®}) can be used. As art for performing short range wireless communication, for example, RFID (radio frequency identification), DSRC (dedicated short range communication) etc. is used.

The power transmission control device 20 is provided with a communication interface 201, storage part 202, and power transmission processing part 203.

The communication interface 201 is a communication interface circuit for connecting the power transmission control device 20 to the internal network 24 of the ground power supply apparatus 2.

The storage part 202 has an HDD or SSD, optical recording medium, semiconductor memory, or other storage medium and stores various computer programs and data used for processing at the power transmission processing part 203.

The power transmission processing part 203 has one or more CPUs (central processing units) and their peripheral circuits. The power transmission processing part 203 runs various computer programs stored in the storage part 202 and comprehensively controls the overall operations of the ground power supply apparatus 2 and is, for example, a processor. The content of the processing performed at the power transmission processing part 203 and in turn the power transmission control device 20 will be explained later referring to FIG. 5.

FIG. 3 is a view showing one example of the configuration of the part of the vehicle 3 according to the present embodiment mainly relating to noncontact power supply.

As shown in FIG. 3, the vehicle 3 is provided with a power receiving apparatus 31, a vehicle side communication device 32, and a vehicle control device 30. The power receiving apparatus 31 and vehicle side communication device 32 are connected to the vehicle control device 30 through an internal vehicle network 38 based on the CAN or other standard.

The power reception device 31 is provided with a power reception side resonator 311 and a power reception circuit 312.

The power reception side resonator 311, as explained above, is a resonance circuit including a power reception coil and is configured to resonate at the same resonance frequency f₀ as the power transmission side resonator 221.

The power reception circuit 312 is an electrical circuit provided with a rectifier and DC/DC converter and is configured to be controlled by the vehicle control device 30 to be able to convert AC power output from the power reception side resonator 311 to DC power by the rectifier and supply it through the DC/DC converter to the electric load 39. As the electric load 39 , for example, a battery, electric motor, etc. may be mentioned, but the invention is not particularly limited to this. In the present embodiment, the power reception circuit 312 is connected to a battery as the electric load 39.

The vehicle side communication device 32 is configured to be able to communicate with at least the server 1 and a ground power supply apparatus 2.

Specifically, the vehicle side communication device 32 is configured so as to be able to access a wireless base station connected with the network 6 (see FIG. 1) through a gateway etc. to thereby connect with the network 6 through the wireless base station. Due to this, wide area wireless communication is performed between the vehicle side communication device 32 and the server 1 and the various information required for noncontact power supply from the power supply apparatus 2 is exchanged with the server 1.

Further, the vehicle side communication device 32 is configured to be able to directly communicate with the ground side communication device 23 of the ground power supply apparatus 2 by short range wireless communication.

The vehicle control device 30 is provided with a communication interface 301, storage part 302, and vehicle processing part 303.

The communication interface 301 is a communication interface circuit for connecting the vehicle control device 30 to the internal vehicle network 38.

The storage part 302 has an HDD or SSD, optical recording medium, semiconductor memory, or other storage medium and stores various computer programs and data used for processing at the vehicle processing part 303.

The vehicle processing part 303 has one or more CPUs and their peripheral circuits. The vehicle processing part 303 runs various computer programs stored in the server storage part 302 so as to comprehensively control the overall operation of the vehicle 3 and is for example a processor.

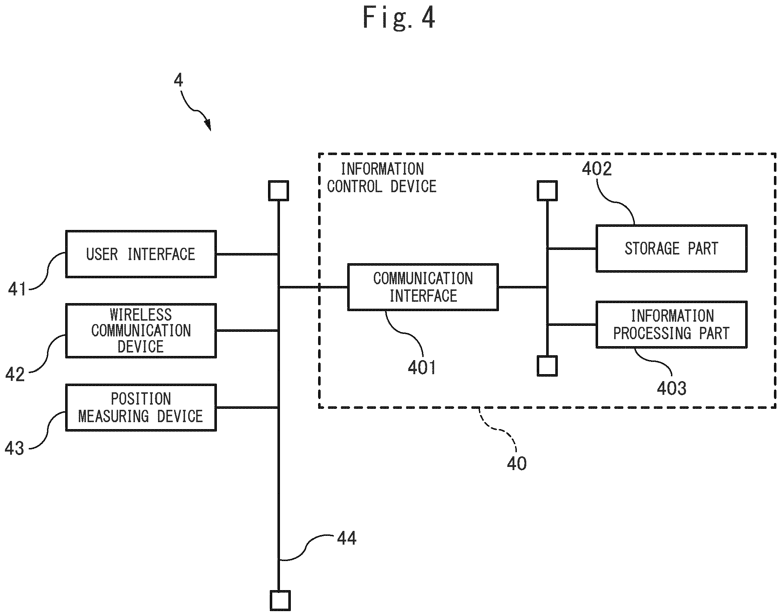

FIG. 4 is a schematic view of the configuration of the information device 4.

The information device 4 is, for example, provided with a user interface 41 with which information can be input and output such as a navigation device or other vehicle-mounted terminal mounted in advance in the vehicle 3 or a mobile phone or tablet computer or other portable terminal held by the system user, a wireless communication device 42, a position measuring device 43, and an information control device 40. The user interface 41, wireless communication device 42, and position measuring device 43 are connected with the information control device 40 through a network 44 based on the CAN or other standard.

The user interface 41 is provided with a display and speaker for providing various information to the system user and a touch panel for enabling the system user to input information on the display. Further, the user interface 41 generates a signal corresponding to various input operations performed by the system user and sends the signal to the information control device 40. Further, the user interface 41 displays various display use information received from the information control device 40 on the display to provide it to the system user.

The wireless communication device 42 is, for example, provided with an antenna and a signal processing circuit for performing various processing relating to wireless communication such as modulation and demodulation of a wireless signal. The wireless communication device 42 accesses a wireless base station connected to the network 6 (see FIG. 1) through a gateway etc. to thereby be connected to the network 6 through the wireless base station. Due to this, wireless communication is performed between the wireless communication device 42 and in turn the information device 4 and the server 1.

The position measuring device 43 is, for example, provided with a receiver for receiving a GNSS (global navigation satellite system) signal and a processing circuit for calculating the position of the information device 4 from the GNSS signal. The position measuring device 43 measures the position of the information device 4 based on the GNSS signal and sends positional information to the information control device 40 each time measuring the position of the information device 4.

The information control device 40 is provided with a communication interface 401, a storage part 402, and an information processing part 403.

The communication interface 401 is provided with an interface circuit for connecting the information control device 40 to the network 44.

The storage part 402, for example, has an HDD or SSD, optical recording medium, semiconductor memory, or other storage medium. The storage part 402 stores various computer programs and various data used by the information processing part 403.

The information processing part 403, for example, is a processor having one or more CPUs and their peripheral circuits. The information processing part 403 may further be provided with other processing circuits such as logical operation units and numerical operation units. The information processing part 403 runs various computer programs stored in the storage part 402. The content of the processing performed by the information processing part 403 and in turn the information control device 40 will be explained later with reference to FIG. 6.

FIG. 5 is a sequence diagram of operation for explaining one example of the contents of processing (computer program) performed at the server 1 and a ground power supply apparatus 2 (in more detail, the server processing part 13 and power transmission control device 20) for setting the charges for usage of the ground power supply apparatuses 2.

At step S101, the ground power supply apparatus 2 calculates the number of vehicles 3 for which the apparatus concerned will perform noncontact power supply (below, referred to as the "number of vehicles for supply with power") and transmits information relating to the number of vehicles for supply with power (below, referred to as the "information on number of vehicles for supply with power") to the server 1. The number of vehicles for supply with power can, for example, be calculated by obtaining a grasp of the number of power transmission apparatuses 22 substantially simultaneously transmitting power based on detection signals of the power transmission sensors 223.

The information on the number of vehicles for supply with power includes, in addition to the number of vehicles for supply with power of the apparatus concerned, for example, the position of installation of the apparatus concerned (latitude and longitude) and other identification information for differentiating the apparatus concerned from other ground power supply apparatuses. Note that, the number of vehicles for supply with power is calculated by the ground power supply apparatus 2 periodically. The ground power supply apparatus 2 transmits to the server 1 the information on the number of vehicles for supply with power relating to the number of vehicles for supply with power calculated each time calculating the information on number of vehicles for supply with power.

At step S102, if receiving information on number of vehicles for supply with power, the server 1 identifies the ground power supply apparatus 2 originating the information on the number of vehicles for supply with power based on the identification information contained in the information on the number of vehicles for supply with power and sets (updates) the charge for usage of the ground power supply apparatus 2 identified based on the number of vehicles for supply with power contained in the information on the number of vehicles for supply with power. The charge for usage of the ground power supply apparatus 2 is made higher since the greater the number of vehicles for supply with power, the higher the electric power demand (that is, the load of the ground power supply apparatus 2) from the vehicles 3 to the ground power supply apparatus 2 that can be judged.

FIG. 6 is a sequence diagram of operation for explaining one example of the contents of processing (computer program) performed at the server 1 and a ground power supply apparatus 2 (in more detail, the server processing part 13 and information control device 40) for providing the charges for usage of the ground power supply apparatuses 2 to the system user.

At step S111, the information device 4 transmits a signal requesting information on the charge for usage to the server 1 if the timing for requesting information on the charge for usage relating to the charge for usage of the ground power supply apparatus 2. In the present embodiment, if transmission of information on the charge for usage of the ground power supply apparatus 2 is requested by a system user through a user interface 41, the information device 4 starts periodic transmission of a signal requesting information on the charge for usage to the server 1.

The signal requesting information on the charge for usage includes, for example, identification information of the information device 4 originating that signal (for example, MAC address etc.) and positional information of the information device 4 (in other words, positional information of the vehicle 3 associated with the information device 4). In addition to this, for example, if able to acquire route information relating to the scheduled running route of the vehicle 3 associated with the information device 4, it is also possible to include the route information in the signal requesting information on the charge for usage.

At step S112, if receiving a signal requesting information on the charge for usage, the server 1 refers to the positional information included in the signal and sends to the information device 4 originating the signal the information on the charges for usage of the ground power supply apparatuses 2 in the surroundings of the information device 4. At this time, if a ground power supply apparatus 2 which finished transmitting information on the charge for usage in the previous processing is included, it is also possible to transmit the information on the charges for usage only for the ground power supply apparatuses 2 with changes in the charges for usage among them. Due to this, the communication load can be reduced.

At step S113, if receiving information on the charges for usage of the ground power supply apparatuses 2 in its surroundings, the information device 4 provides that information to the system user through the user interface 41.

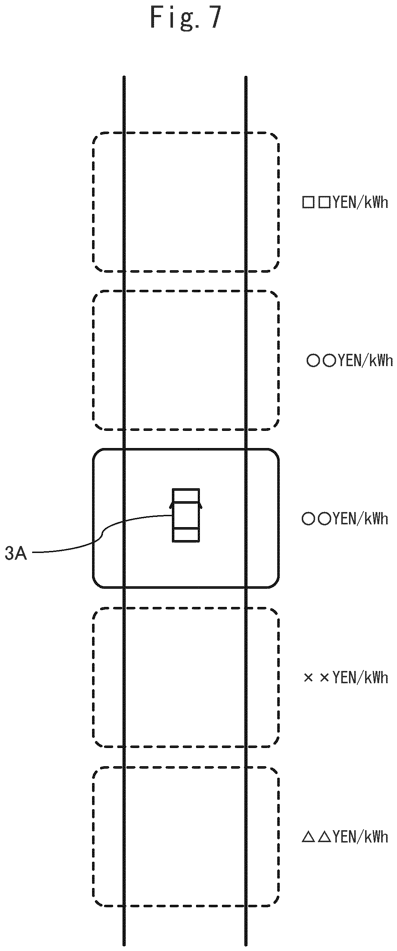

For example, the information device 4, as shown in FIG. 7, can display information on the charge for usage of the ground power supply apparatus 2 at the current position of the vehicle 3 associated with the device concerned and information on the charges for usage of the ground power supply apparatuses 2 positioned at the front in the advancing direction or rear in the advancing direction of the vehicle 3 associated with the device concerned together with an icon 3A of the vehicle 3 associated with the device concerned on a display to provide them to the system user.

The information on the charge for usage provided to the system user may be an absolute price or may be a relative price based on the charge for usage of the ground power supply apparatus 2 at the current position of the vehicle 3 associated with the information device 4. At this time, to facilitate obtaining a grasp of the charge for usage, in the display, it is also possible to suitably color the display of the charge or the location in accordance with the information on the charge for usage. For example, there is the method of display high charges and locations in red and low charges and locations in blue etc.

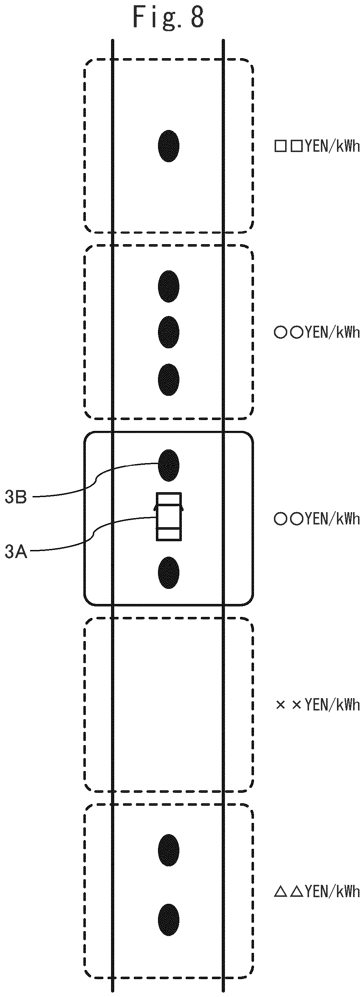

Further, as shown in FIG. 8, for example, if vehicle-vehicle communication etc. can be used to acquire from another vehicle positioned at the front in the advancing direction or rear in the advancing direction of the vehicle 3 associated with the device concerned the information on whether the other vehicle is receiving noncontact power supply, it is also possible to display an icon 3B of the other vehicle receiving power positioned at the front in the advancing direction or rear in the advancing direction of the vehicle 3 associated with the device concerned on the display together with an icon 3A of the vehicle 3 associated with the device concerned to provide that to the system user. Note that, in FIG. 8, to facilitate differentiation of the vehicle 3 associated with the device concerned and the other vehicle, the icon 3B of the other vehicle is made an ellipse. By display in this way, a driver can obtain a grasp of the fact of charges being higher due to a large number of other vehicles receiving power near the vehicle 3 associated with the device concerned. It is possible to lower the charge by departing from the group of vehicles for supply with power (section in which ground power supply apparatus 2 with large number of other vehicles receiving power supply is installed).

Note that, in the example shown in FIG. 7 and FIG. 8, the method of informing the driver of the charge for use was shown, but, for example, if the vehicle 3 associated with the device concerned is an automated driving vehicle in which driving operations relating to acceleration, steering, and braking are automatically performed by the vehicle control device 30, it is also possible to provide the vehicle control device 30 with the information on the charge for usage etc. and automatically make the vehicle 3 run to depart from the group of vehicles for supply with power so that the charge for usage becomes cheaper. That is, if the vehicle control device 30 is provided with an automated driving control part for automatically performing driving operations relating to acceleration, steering, and braking of the vehicle 3, it is also possible to configure the automated driving control part so as to automatically control the vehicle 3 using information relating to the charges for usage of the ground power supply apparatuses 2 acquired by communicating with the server 1 (for example, information relating to the charges for usage of the ground power supply apparatuses 2 installed at least at one of the front in the advancing direction or rear in the advancing direction of the vehicle 3). Specifically, the automated driving control part can be configured so as to automatically change the relative position with other vehicles based on the charge for usage of ground power supply apparatus. Further, the automated driving control part can be configured so as to automatically change the relative position with other vehicles so that the charge for usage of the ground power supply apparatus 2 becomes lower.

Further, for example, if it is possible to calculate the scheduled running route up to the destination of the vehicle 3 associated with the device concerned or to acquire it by a method such as communication with the server 1 or vehicle 3, the information device 4 may calculate the presumed amount of the total charge for usage when running on a scheduled running route based on the charges for usage of the ground power supply apparatuses 2 on the scheduled running route and provide the calculated presumed amount of the total charge for usage to the system user. At this time, in addition to the scheduled running route, it is also possible to display along with it another running route and the presumed amount of the total charge for usage when running on that other running route.

The noncontact power supply system 100 according to the present embodiment explained above is provided with an information device 4 associated with a vehicle (moving body) able to receive noncontact power supply from the ground power supply apparatuses 2 and providing information to the user of the vehicle 3 as the system user and with a server 1 communicating with the information device 4. Further, the server 1 is configured to set the charges for usage of the ground power supply apparatuses 2 based on the electric power demand. The information device 4 is configured so as to provide the system user with information relating to the charges for usage of the ground power supply apparatuses 2 acquired by communicating with the server 1.

In the present embodiment, the electric power demand is electric power demand from vehicles 3 to the ground power supply apparatuses 2. The server 1 is configured so as to set a charge for usage of a ground power supply apparatus 2 with a higher electric power demand from the vehicles 3 higher than a charge for usage of a ground power supply apparatus 2 with a lower electric power demand from the vehicles 3. Specifically, in the present embodiment, a ground power supply apparatus 2 is configured to be able to supply power by noncontact to a plurality of vehicles 3. The server 1 is configured so as to set a charge for usage of a ground power supply apparatus 2 with a larger number of vehicles 3 for supply with power higher than a charge for usage of a ground power supply apparatus 2 with a smaller number of vehicles 3 for supply with power.

In this way, according to the present embodiment, information relating to the charges for usage of the ground power supply apparatuses 2 set based on the electric power demand is provided to the system user. A charge for usage of a ground power supply apparatus 2 is set higher the higher the electric power demand from vehicles 3 on the ground power supply apparatus 2. For this reason, for example, it is possible to prompt a system user with a low urgency of noncontact power supply to utilize another ground power supply apparatus 2 with a lower charge for usage or prompt him to suspend noncontact power supply, so it is possible to keep vehicles 3 desiring noncontact power supply from ending up concentrating at just some of the ground power supply apparatuses 2 and in turn just some of the electrified road sections.

Further, the information device 4 according to the present embodiment is configured so as to acquire information relating to a changed charge for usage from the server 1 and again provide it to the system user if the charge for usage of the ground power supply apparatus 2 provided to the system user has changed by greater than or equal to a predetermined value.

Due to this, it is possible to keep down the communication load between the server 1 and the information device 4.

Further, the information device 4 according to the present embodiment is configured so as to provide to the system user the information relating to the charge for usage of a ground power supply apparatus 2 installed at least at one of the front in the advancing direction or rear in the advancing direction of the vehicle 3 (moving body) associated with the information device 4. As information relating to the charge for usage of a ground power supply apparatus 2, it is possible to provide the absolute price of the ground power supply apparatus 2 and possible to supply the relative price with the charge for usage of a reference ground power supply apparatus 2. The reference ground power supply apparatus 2 can be made the ground power supply apparatus supplying power to the vehicle 3 (moving body) associated with the information device 4.

Due to this, the system user can easily obtain a grasp of the charge for usage of a ground power supply apparatus 2 in the surroundings.

Further, the information device 4 according to the present embodiment is configured to further provide the system user with information relating to another vehicle 3 when there is another vehicle 3 for supply with power at a ground power supply apparatus 2 installed at least at one of the front in the advancing direction or rear in the advancing direction of the vehicle 3 associated with that device.

Due to this, the system user becomes able to easily obtain a visual grasp of the degree of congestion at a ground power supply apparatus 2 in the surroundings.

Further, the information device 4 according to the present embodiment is configured to calculate the presumed amount of the total charge for usage when running on a scheduled running route based on the scheduled running route of the vehicle 3 (moving body) associated with the device concerned and the charges for usage of the ground power supply apparatuses 2 on the scheduled running route and provides that presumed amount to the system user as information relating to the charges for usage of the ground power supply apparatuses 2.

Due to this, for the system user, change of the running route in accordance with the charge for usage becomes easy, so it is possible to prompt dispersion of the vehicles 3 and keep vehicles 3 desiring noncontact power supply from ending up concentrating at just some of the ground power supply apparatuses 2 and in turn just some of the electrified road sections.

Note that, if the information device 4 is a navigation device or other vehicle-mounted terminal mounted in advance in a vehicle 3, the vehicle 3 (moving body) can be understood as being provided with a communication part configured to be able to communicate with a server 1 for setting charges for usage of ground power supply apparatuses 2 based on electric power demand and with an information part providing the user with information relating to the charges for usage of ground power supply apparatuses 2 acquired by communicating with the server 1. Further, in that case, the vehicle control device 30 may also be given the function of the information control device 40. That is, the vehicle control device 30 may be provided with a communication part configured to be able to communicate with a server 1 for setting charges for usage of ground power supply apparatuses 2 based on electric power demand and with an information part providing the user with information relating to the charges for usage of ground power supply apparatuses 2 acquired by communicating with the server 1.

### (Second Embodiment)

Next, a second embodiment of the present invention will be explained. The present embodiment differs in the method of setting the charges for usage of the ground power supply apparatuses 2 from the first embodiment. Below, it will be explained focusing on the points of difference.

In the above-mentioned first embodiment, in setting the charges for usage of the ground power supply apparatuses 2 based on electric power demand, the electric power demand was grasped from the current numbers of vehicles for supply with power of the ground power supply apparatuses 2. As opposed to this, in the present embodiment, the electric power demand is grasped from the rates of power use [%] of the ground power supply apparatuses 2. The "rate of power use" of a ground power supply apparatus 2 is the ratio of the current amount of power used by the ground power supply apparatus 2 to the amount of power able to be supplied by the ground power supply apparatus 2.

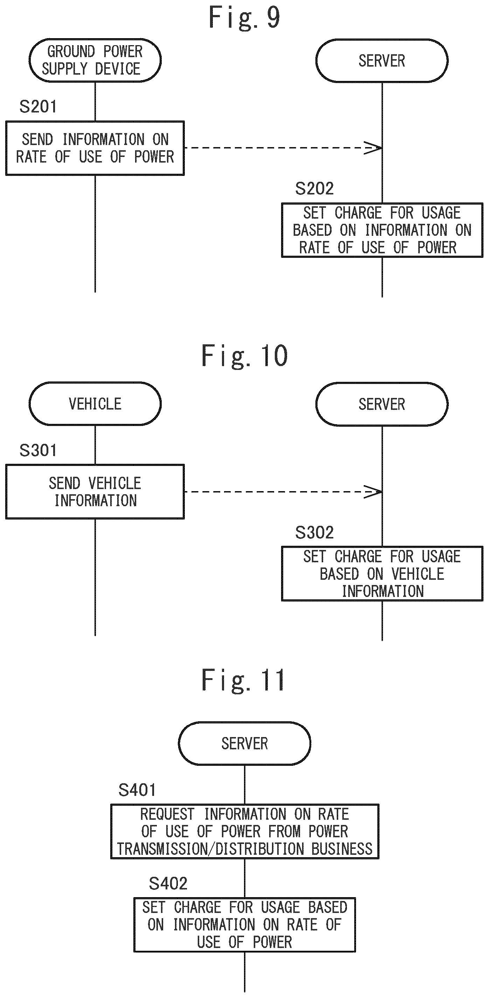

FIG. 9 is a sequence diagram of operation for explaining one example of the contents of processing (computer program) according to the present embodiment performed at the server 1 and a ground power supply apparatus 2 (in more detail, the server processing part 13 and power transmission control device 20) for setting the charges for usage of the ground power supply apparatuses 2.

At step S201, the ground power supply apparatus 2 calculates the rate of power use of the apparatus concerned and sends information relating to the rate of power use (below, referred to as the "information on the rate of power use") to the server 1. The information on the rate of power use includes, in addition to the rate of power use of the apparatus concerned, identification information for identifying the apparatus concerned from other ground power supply apparatuses and other various information required for setting the charge for usage. Note that, the rate of power use is periodically calculated by the ground power supply apparatus 2. The ground power supply apparatus 2 sends the rate of power use to the server 1 each time calculating it.

At step S202, if receiving information on a rate of power use, the server 1 identifies the ground power supply apparatus 2 originating the information on the rate of power use based on the identification information contained in the information on the rate of power use and sets (updates) the charge for usage of the ground power supply apparatus 2 identified based on the rate of power use contained in the information on the rate of power use. The charge for usage of the ground power supply apparatus 2 is made higher since the higher the rate of power use, the higher the electric power demand from vehicles 3 with respect to the ground power supply apparatus 2 that can be judged.

The server 1 according to the present embodiment explained above is configured so as to set a charge for usage of a ground power supply apparatus 2 with a higher rate of power use higher than a charge for usage of a ground power supply apparatus 2 with a lower rate of power use.

By doing this as well, in the same way as the first embodiment, for example, it is possible to prompt a system user with a low urgency of noncontact power supply to utilize another ground power supply apparatus 2 with a low charge for usage or prompt him to suspend noncontact power supply, so it is possible to keep vehicles 3 desiring noncontact power supply from ending up concentrating at just some of the ground power supply apparatuses 2 and in turn just some of the electrified road sections.

### (Third Embodiment)

Next, a third embodiment of the present invention will be explained. The present embodiment differs in the method of setting the charges for usage of the ground power supply apparatuses 2 from the above embodiments. Below, it will be explained focusing on the points of difference.

In the embodiments explained above, the electric power demand from the vehicles 3 to the ground power supply apparatuses 2 was grasped by communicating with the ground power supply apparatuses 2. As opposed to this, in the present embodiment, the electric power demand from the vehicles 3 to the ground power supply apparatuses 2 is grasped by communicating with the vehicles 3.

FIG. 10 is a sequence diagram of operation for explaining one example of the contents of processing (computer program) according to the present embodiment performed at the server 1 and the vehicle 3 (in more detail, the server processing part 13 and vehicle control device 30) for setting the charges for usage of the ground power supply apparatuses 2.

At step S301, the vehicle 3 sends the server 1 vehicle information including the scheduled running route and current position of the vehicle concerned. The vehicle information is transmitted periodically. The method of acquiring the scheduled running route or current position is not particularly limited, but the scheduled running route can, for example, be acquired from a navigation device (not shown) mounted in the vehicle 3. Further, the current position, for example, can be acquired from a position measuring device (not shown) mounted in the vehicle 3.

At step S302, the server 1 predicts the time frames in which the vehicles 3 will pass the ground power supply apparatuses 2 based on the vehicle information including the scheduled running routes and current positions received from the vehicles 3 and calculates the numbers of vehicles 3 passing the ground power supply apparatuses 2 for each time frame. That is, the server 1 calculates the estimated number of vehicles for supply with power for each time frame of the ground power supply apparatuses 2. Further, the server 1 sets the charges for usage of the ground power supply apparatuses 2 for each time frame based on the estimated numbers of vehicles for supply with power for each time frame of the ground power supply apparatuses 2. Specifically, the server 1 sets the charges for usage of the ground power supply apparatuses 2 for each time frame so that, when compared at the same time frame, a ground power supply apparatus 2 with a greater estimated number of vehicles for supply with power becomes higher in charge for usage than a ground power supply apparatus 2 with a lesser estimated number of vehicles for supply with power.

The ground power supply apparatus 2 according to the present embodiment explained above is configured to be able to perform noncontact power supply for a plurality of vehicles 3 (moving bodies). Further, the server 1 is configured to calculate the estimated numbers of vehicles for supply with power of the ground power supply apparatuses 2 for each time frame and set the charges for usage of the ground power supply apparatuses 2 based on the estimated numbers of vehicles for supply with power of the ground power supply apparatuses 2 in the same time frame. Specifically, the server 1 is configured to set the charge for usage of a ground power supply apparatus 2 with a larger estimated number of vehicles for supply with power in the same time frame higher than the charge for usage of a ground power supply apparatus 2 with a smaller estimated number of vehicles for supply with power in the same time frame.

In this way, it is possible to predict the numbers of vehicles 3 which will pass the ground power supply apparatuses 2 for each time frame and predict the estimated numbers of vehicles for supply with power (that is, the estimated numbers of vehicles passing) for each time frame so as to predict the electric power demand from the vehicles 3 for the ground power supply apparatuses 2 for each time frame to set a suitable charge for usage. For this reason, for example, it is possible to prompt a user desiring to save on the charge for usage of a ground power supply apparatus 2 etc. to change the running route so as to run on an electrified road at which a ground power supply apparatus 2 with a lower charge for usage than the current schedule running route is installed, so it is possible to keep vehicles 3 desiring noncontact power supply from ending up concentrating at just some of the ground power supply apparatuses 2 and in turn just some of the electrified road sections.

### (Fourth Embodiment)

Next, a fourth embodiment of the present invention will be explained. The present embodiment differs in the method of setting the charges for usage of the ground power supply apparatuses 2 from the above embodiments. Below, it will be explained focusing on the points of difference.

In the embodiments explained above, the charges for usage of the ground power supply apparatuses 2 were set based on the electric power demand on the ground power supply apparatuses 2. As opposed to this, in the present embodiment, the charges for usage of the ground power supply apparatuses 2 are set based on the electric power demands of entire regions in which the ground power supply apparatuses 2 are installed.

FIG. 11 is a sequence diagram of operation for explaining one example of the contents of processing for setting charges for usage (computer program) according to the present embodiment performed at the server 1 (in more detail, the server processing part 13) for setting the charges for usage of the ground power supply apparatuses 2.

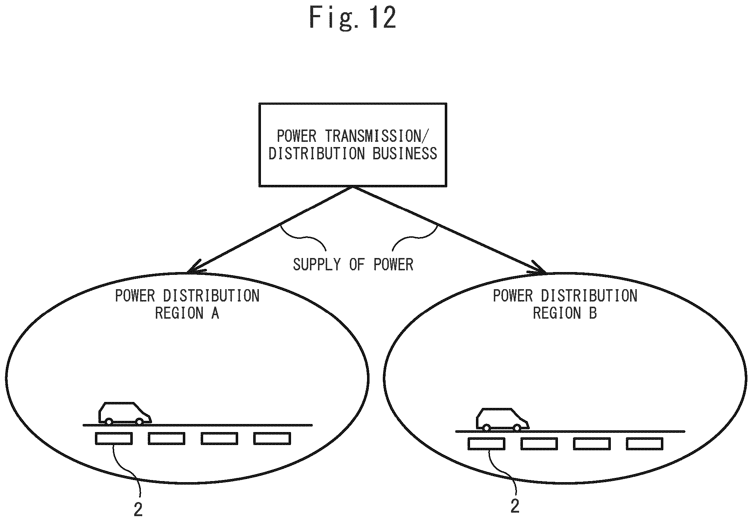

At step S401, the server 1, for example, requests that a power transmission/distribution business (for example, electric power company) shown in FIG. 12 provide information relating to the rates of power use of the power distribution regions of the power transmission/distribution business. This request is performed periodically. Note that, FIG. 12 illustrates two power distribution regions A, B as the power distribution regions of the power transmission/distribution business. Further, the rate of power use [%] of a power distribution region is the ratio of the current amount of power used by the power distribution region to the amount of power able to be supplied by the power distribution region.

At step S402, if receiving information relating to the rates of power use of the power distribution regions from the power transmission/distribution business, the server 1 sets the charges for usage of the ground power supply apparatuses 2 installed in the power distribution regions based on the rates of power use of the power distribution regions. For example, in FIG. 12, when the rate of power use of the power distribution region A is higher than the rate of power use of the power distribution region B, the server 1 makes the charge for usage of the ground power supply apparatuses 2 installed at the power distribution region A higher than the charge for usage of the ground power supply apparatuses 2 installed at the power distribution region B.

In the present embodiment explained above, the electric power demand is the electric power demand of the region in which the ground power supply apparatuses 2 are set. The server 1 is configured to set a charge for usage of a ground power supply apparatus 2 set in a region with a high rate of power use higher than a charge for usage of a ground power supply apparatus 2 set in a region with a low rate of power use.

Due to this, for example, even a user desiring to save on the charge for usage of the ground power supply apparatus 2 etc. can be prompted to run in a power distribution region with a lower charge for usage of the ground power supply apparatus 2, so it is possible to keep vehicles 3 desiring noncontact power supply from ending up concentrating in some power distribution regions.

Above, embodiments of the present invention were explained, but the above embodiments just show some of the examples of application of the present invention and are not intended to limit the technical scope of the present invention to the specific constitutions of the above embodiments.

- 1: server
- 2: ground power supply apparatus
- 3: vehicle (moving body)
- 4: information device
- 100: noncontact power supply system

## Claims

1. A noncontact power supply system, wherein
the noncontact power supply system comprises:
an information device associated with a moving body and configured to provide information to a user of the moving body, the moving body configured to be able to receive noncontact power supply from ground power supply apparatuses; and
a server configured to communicate with the information device, and
the server is configured to set charges for usage of ground power supply apparatuses based on electric power demand, and
the information device is configured to provide the user with information relating to the charges for usage of ground power supply apparatuses acquired by communicating with the server.

2. The noncontact power supply system according to claim 1, wherein
the electric power demand is electric power demand from the moving body with respect to the ground power supply apparatuses.

3. The noncontact power supply system according to claim 1 or claim 2, wherein
the server makes the charge for usage of a ground power supply apparatus with high electric power demand from the moving body higher than the charge for usage of a ground power supply apparatus with a low electric power demand from the moving body.

4. The noncontact power supply system according to claim 1, wherein
a ground power supply apparatus is configured to be able to supply power by noncontact to a plurality of moving bodies, and
the server is configured to make a charge for usage of a ground power supply apparatus with a larger number of moving bodies for supply with power higher than a charge for usage of a ground power supply apparatus with a smaller number of moving bodies for supply with power.

5. The noncontact power supply system according to claim 1, wherein .
a ground power supply apparatus is configured to be able to supply power by noncontact to a plurality of moving bodies, and
the server is configured to:
calculate estimated numbers of vehicles for supply with power of the ground power supply apparatuses; and
set charges for usage of the ground power supply apparatuses based on the estimated numbers of vehicles for supply with power of the ground power supply apparatuses in the same time frame.

6. The noncontact power supply system according to claim 5, wherein
the server is configured to make a charge for usage of a ground power supply apparatus with a larger estimated number of vehicles for supply with power in the same time frame higher than a charge for usage of a ground power supply apparatus with a smaller estimated number of vehicles for supply with power in the same time frame.

7. The noncontact power supply system according to claim 1, wherein
the server is configured to make a charge for usage of a ground power supply apparatus with a higher rate of power use higher than a charge for usage of a ground power supply apparatus with lower rate of power use.

8. The noncontact power supply system according to claim 1, wherein
the electric power demand is electric power demand of the region in which the ground power supply apparatuses are installed.

9. The noncontact power supply system according to claim 1 or claim 8, wherein
the server is configured to make a charge for usage of a ground power supply apparatus installed in a region with a higher rate of power use higher than a charge for usage of a ground power supply apparatus installed in a region with a lower rate of power use.

10. The noncontact power supply system according to any one of claim 1 to claim 9, wherein
the information device is configured to acquire information relating to a charge for usage after change from the server and providing it again to the user if a charge for usage of a ground power supply apparatus provided to the user has changed by greater than or equal to a predetermined value.

11. The noncontact power supply system according to any one of claim 1 to claim 10, wherein
the information device is configured to provide the user with information relating to a charge for usage of a ground power supply apparatus installed at least at one of a front in an advancing direction or a rear in the advancing direction of the moving body associated with the information device.

12. The noncontact power supply system according to any one of claim 1 to claim 11, wherein
the information device is configured to provide the user with an absolute price of a ground power supply apparatus as information relating to the charge for usage of the ground power supply apparatus.

13. The noncontact power supply system according to any one of claim 1 to claim 12, wherein
the information device is configured to provide the user with a relative price with respect to a charge for usage of a reference ground power supply apparatus as information relating to the charge for usage of the ground power supply apparatus.

14. The noncontact power supply system according to claim 13, wherein
the reference ground power supply apparatus is a ground power supply apparatus able to supply power to the moving body associated with the information device.

15. The noncontact power supply system according to any one of claim 1 to claim 14, wherein
the information device is configured to further provide the user with information relating to another moving body when there is another moving body for supply of power present at a ground power supply apparatus installed at least at one of a front in an advancing direction or a rear in the advancing direction of the moving body associated with the device.

16. The noncontact power supply system according to any one of claim 1 to claim 15, wherein
the information device is configured to:
calculate a presumed amount of total charge for usage when running on a scheduled running route based on the scheduled running route of the moving body associated with the information device and the charges for usage of the ground power supply apparatuses on the scheduled running route; and
provide the user with the presumed amount as information relating to the charges for usage of ground power supply apparatuses.

17. A server, wherein:
the sever comprises:
a communication part configured to be able to communicate with an information device which is associated with a moving body and is configured to provide information to a user of the moving body, the moving body configured to be able to receive noncontact power supply from ground power supply apparatuses; and
a control part, and
the control part is configured to:
set charges for usage of ground power supply apparatuses based on electric power demand; and
transmit information relating to the set charges for usage of ground power supply apparatuses to the information device.

18. An information device associated with a moving body and configured to provide information to a user of the moving body, wherein
the moving body is configured to be able to receive noncontact power supply from ground power supply apparatuses, and
the information device comprises:
a communication part configured to be able to communicate with a server for setting charges for usage of ground power supply apparatuses based on electric power demand; and
a control part, and
the control part is configured to provide the user with information relating to the charges for usage of ground power supply apparatuses acquired by communicating with the server.

19. A moving body configured to be able to receive noncontact power supply from a ground power supply apparatus, wherein
the moving body comprises:
a communication part configured to be able to communicate with a server for setting charges for usage of ground power supply apparatuses based on electric power demand; and
an information part configured to provide the user with information relating to the charges for usage of ground power supply apparatuses acquired by communicating with the server, and
the information part is configured to provide the user with information relating to the charges for usage of ground power supply apparatuses acquired by communicating with the server.

20. A control device mounted in a moving body which is configured to be able to receive noncontact power supply from a ground power supply apparatus, wherein
the control device comprises:
a communication part configured to be able to communicate with a server for setting charges for usage of ground power supply apparatuses based on electric power demand; and
an information part configured to provide the user with information relating to the charges for usage of ground power supply apparatuses acquired by communicating with the server, and
the information part is configured to provide the user with information relating to the charges for usage of ground power supply apparatuses acquired by communicating with the server.

21. A control device mounted in a moving body which is configured to be able to receive noncontact power supply from a ground power supply apparatus, wherein
the control device comprises:
an automated driving control part for automatically performing driving operations of the moving body; and
a communication part configured to be able to communicate with a server for setting charges for usage of ground power supply apparatuses based on electric power demand, and
the automated driving control part is configured to use information relating to the charges for usage of ground power supply apparatuses acquired by communicating with the server so as to automatically control the moving body.

22. The control device of a moving body according to claim 21, wherein
the information is information relating to a charge for usage of a ground power supply apparatus installed at least at one of a front in an advancing direction or a rear in the advancing direction of the moving body.

23. The control device of a moving body according to claim 21 or claim 22, wherein
the automated driving control part is configured to automatically change a relative position with another vehicle based on the charge for usage of the ground power supply apparatus.

24. The control device of a moving body according to any one of claim 21 to claim 23, wherein
the automated driving control part is configured to automatically change a relative position with another vehicle so that the charge for usage of the ground power supply apparatus becomes cheaper.
